(19) Europäisches Patentamt
European Patent Office
Office européen des brevets

(11) **EP 2 329 328 B1**

(12) **FASCICULE DE BREVET EUROPEEN**

(45) Date de publication et mention
de la délivrance du brevet:
**30.05.2012 Bulletin 2012/22**

(51) Int Cl.:
***G05B 19/4069*** *(2006.01)*

(21) Numéro de dépôt: **09740378.6**

(86) Numéro de dépôt international:
**PCT/FR2009/051492**

(22) Date de dépôt: **24.07.2009**

(87) Numéro de publication internationale:
**WO 2010/010310 (28.01.2010 Gazette 2010/04)**

(54) **PROCEDE DE DETERMINATION DES CONDITIONS D'UNE PHASE D'USINAGE D'UNE PIECE AVEC MODULATION DE LA VITESSE DE COUPE**

VERFAHREN ZUR BESTIMMUNG DER ZUSTÄNDE EINER PHASE ZUR MASCHINENBEARBEITUNG EINES ARBEITSSTÜCKS MIT MODULIERTER SCHNEIDGESCHWINDIGKEIT

METHOD OF DETERMINING THE CONDITIONS OF A PHASE FOR MACHINING A WORKPIECE WITH MODULATED CUTTING RATE

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **25.07.2008 FR 0855123**

(43) Date de publication de la demande:
**08.06.2011 Bulletin 2011/23**

(73) Titulaire: **Snecma**
**75015 Paris (FR)**

(72) Inventeurs:
• **COFFIGNAL, Gérard**
**F-94700 Maisons Alfort (FR)**

• **LORONG, Philippe**
**F-92160 Antony (FR)**
• **PEREZ-DUARTE, Alexis**
**F-92340 Bourg La Reine (FR)**

(74) Mandataire: **Barbin le Bourhis, Joël et al**
**Cabinet Beau de Loménie**
**158, rue de l'Université**
**75340 Paris Cedex 07 (FR)**

(56) Documents cités:
**EP-A- 0 879 675       EP-A- 1 296 210**
**DE-A1- 19 808 565     US-A1- 2005 113 963**

**Description**

L'invention concerne généralement la détermination des conditions de l'usinage d'une pièce susceptible d'entrer en vibration au cours dudit usinage. Elle a pour but de déterminer les conditions de coupe et notamment la vitesse de coupe pour éviter l'apparition de ces vibrations.

Certaines pièces de grande dimension comme par exemple des disques de rotor de turbomachine ont une forme en cloche à paroi assez mince ayant tendance à entrer en vibration en cours d'usinage.

Il existe des outils de simulation des vibrations en cours d'usinage qui permettent dans certains cas d'anticiper ces problèmes de vibration lors du tournage ou du fraisage de telles pièces. Néanmoins ces outils de simulation sont généralement fondés sur une approche fréquentielle qui ne permet d'étudier que des systèmes dont la vitesse de rotation est constante. Or, il est intéressant, pour éviter l'entrée en résonance d'une telle pièce de faire varier périodiquement la vitesse de rotation (en tournage ou en fraisage) afin de casser l'entrée en résonance du système et donc l'apparition desdites vibrations. Une telle fonction de modulation de la vitesse de coupe se caractérise par deux paramètres : l'amplitude de variation de la vitesse et la période de cette variation.

Cependant, pour chaque phase d'usinage, il reste à déterminer la bonne fonction de modulation. Jusqu'à présent, on a procédé de façon empirique. Ceci implique, au moment de l'élaboration de la gamme d'usinage de chaque pièce, de faire de nombreux essais qui se traduisent par une perte de temps importante et une mise au rebut de nombreuses pièces en alliage coûteux.

L'invention permet de résoudre ce problème en proposant des simulations successives de la phase d'usinage permettant d'optimiser les paramètres de la fonction de modulation.

Plus particulièrement, l'invention concerne un procédé de détermination des conditions d'une phase d'usinage d'une pièce avec modulation d'une vitesse de coupe entre ladite pièce et un outil, caractérisé en ce que l'on simule ladite phase d'usinage en fixant provisoirement les paramètres d'une fonction de modulation de ladite vitesse, en ce que l'on déduit par calcul l'état de surface correspondant de la pièce, après achèvement de ladite phase d'usinage, en ce que l'on modifie itérativement lesdits paramètres de la fonction de modulation en simulant à chaque fois ladite phase d'usinage pour en déduire l'état de surface correspondant jusqu'à ce que celui-ci atteigne une valeur admissible et en ce que l'on procède à ladite phase d'usinage en faisant varier la vitesse de coupe selon la fonction de modulation correspondant à l'état de surface de valeur admissible.

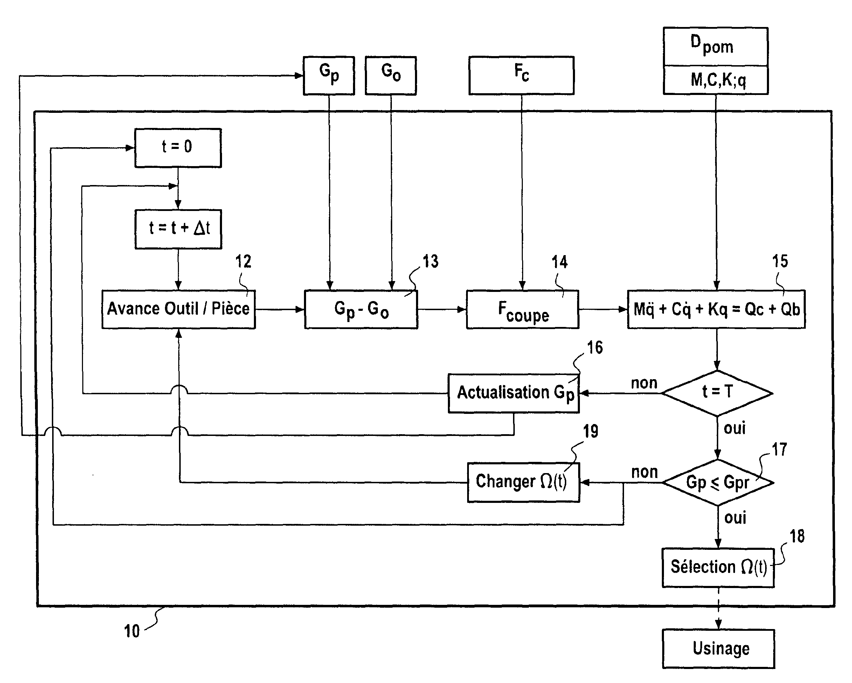

L'invention sera mieux comprise et d'autres caractéristiques de celle-ci apparaîtront plus clairement à la lumière de la description qui va suivre d'un exemple de procédé de détermination des conditions d'une phase d'usinage d'une pièce avec modulation de la vitesse de coupe entre la pièce et l'outil, donnée uniquement à titre d'exemple et faite en référence au dessin annexé, dans lequel la figure unique est un schéma bloc avec organigramme du processus itératif de détermination de ces paramètres, permettant de commander un usinage.

La figure décrit la simulation de l'usinage. On considère qu'une passe d'usinage doit être réalisée en un temps donné T. Soit $\Delta t$ un intervalle de temps de ce temps donné T. Plus $\Delta t$ est choisi faible, plus les calculs seront nombreux mais permettront de décrire avec précision les phénomènes et la géométrie de la pièce, y compris son état de surface à l'issue de la passe d'usinage. Cette passe d'usinage est une phase d'usinage où l'outil reste en permanence engagé dans la matière de la pièce.

Par ailleurs, on dispose d'un certain nombre de modèles permettant de représenter sous forme informatique les pièces et ensembles constituant le système et de décrire les interactions entre les différentes pièces et ensembles entre eux. La plupart des modèles décrivant le comportement mécanique des pièces et ensembles sont élaborés selon la technique dite des éléments finis. La pièce ou l'ensemble est représentée par un ensemble d'éléments formant un maillage. A chaque noeud de ce maillage on associe des valeurs représentant des phénomènes à décrire. Par exemple, pour la simple représentation d'une pièce supposée rigide, les coordonnées des noeuds suffisent pour constituer le modèle. Si la partie décrite par le modèle est susceptible d'évoluer (déformation, mouvement), des degrés de liberté supplémentaires sont nécessaires pour les transformations du modèle. On ajoute par exemple trois degrés de liberté en rotation et trois degrés de liberté en translation.

Les modèles décrivant les interactions entre les différentes pièces et éléments entre eux peuvent être de plusieurs natures : fonction de transfert, modèle descriptif, équation...

Selon l'invention, on distingue les modèles suivants :

- Gp est le modèle géométrique initial de la zone de la pièce affectée par l'usinage.
- Go est le modèle géométrique des parties actives de l'outil. Go peut être constant bien qu'il soit possible d'envisager et de décrire une variation lente de ce modèle pour tenir compte, par exemple de l'usure de l'outil. De façon plus précise, ce modèle géométrique est en fait un ensemble de modèles décrivant les différents outils élémentaires (dents, inserts, plaquettes, ...). Le modèle géométrique est surfacique. Il représente les parties actives de l'outil, notamment les faces de coupe.

Si les parties actives de l'outil sont susceptibles de se déformer, le modèle géométrique pourra intégrer les déformations de ces parties actives, au cours du temps et en fonction de l'engagement entre l'outil et la pièce.

- Fc est un modèle de force de coupe (loi de coupe locale) résultant de l'interaction entre l'outil et la pièce. On peut par exemple faire appel à une loi de coupe du type Kienzel connue de l'homme du métier permettant de déterminer localement les efforts de coupe instantanés en fonction de la section de matière enlevée (épaisseur et largeur de la coupe c'est-à-dire dimension du copeau) et de la cinématique outil-pièce. Les efforts de coupe instantanés sont les efforts appliqués par l'outil sur la pièce et réciproquement aux points sélectionnés pour décrire de façon précise l'interaction entre l'outil et la pièce.
- Dpom est un modèle dynamique du système pièce-outil-machine. Ce modèle Dpom est typiquement un modèle à éléments finis permettant de décrire le comportement dynamique de ce système en cours d'usinage. Le modèle dynamique Dpom intègre des paramètres M, C, K, sous forme de matrices et une matrice colonne q, qui seront décrits plus loin.

On va maintenant décrire la simulation de l'usinage en référence à la figure, où les différents modèles qui viennent d'être définis pour intervenir dans le processus, sont représentés en marge de l'organigramme illustrant l'algorithme 10 de détermination d'une fonction de modulation de la vitesse de coupe.

L'instant t = 0 est le début d'une phase de simulation d'usinage envisagée. Pour chaque t = t + Δt, on peut définir l'avance de l'outil par rapport à la pièce (bloc 12). Cette avance varie au cours du temps puisqu'elle dépend de la fonction de modulation de la vitesse de coupe. Par exemple, cette vitesse de coupe s'exprime :

$$\Omega(t) = \Omega_N + \Delta\Omega. \, F\omega(t)$$

avec

$$-1 < F\omega(t) < 1$$

Fω(t) étant une fonction périodique de période $2\,\Pi/\omega$, $\Omega_N$ étant une vitesse nominale et ΔΩ une amplitude de variation autour de ladite vitesse nominale.

Avantageusement, Fω(t) est une sinusoïde.

On recherche les paramètres de cette fonction de modulation qui permettent d'obtenir un état de surface satisfaisant, c'est-à-dire une "rugosité" ou une "ondulation" inférieure à une valeur prescrite.

A partir de cette description 12 de l'avance outil/pièce et des modèles Gp et Go, il est possible de décrire (bloc 13) l'interaction (l'intersection) entre la pièce et l'outil. Le résultat de cette interaction et le modèle Fc permettent de décrire les efforts locaux Fcoupe(t) (bloc 14).

A l'aide du modèle dynamique Dpom et des efforts locaux Fcoupe(t), on est en mesure d'établir et résoudre un système d'équations différentielles (bloc 15)

$$M\ddot{q} + C\dot{q} + k\,q = Q_c + Q_b$$

où :

- q (t) est la matrice colonne d'un ensemble de paramètres $q_i(t)$
- q (t) sont les dérivées premières de q(t)
- q (t) sont les dérivées secondes de q(t)
- $Q_c(t)$ représente les efforts généralisés provenant de l'interaction outil-pièce. Ils se déduisent des efforts locaux Fcoupe(t) obtenus via le modèle de coupe.

$Q_b(t)$ représente les efforts généralisés autres que $Q_c$. Il s'agit notamment des efforts de bridage.

M(t, Ω) est la matrice de masse.

C(t, Ω) est la matrice d'amortissement.

K(t, Ω) est la matrice de raideur.

Les matrices M, C et K peuvent évoluer (lentement) en cours d'usinage pour rendre compte des pertes de masse et de rigidité consécutives à l'enlèvement de matière. Ces matrices peuvent également inclure un effet gyroscopique fonction de Ω.

Pour chaque incrément de temps Δ(t) prédéterminé, on résout le système d'équations différentielles. Ainsi, connaissant q(t) pour t appartenant à l'intervalle [0,T], on peut obtenir q (t + Δt) tant que l'accumulation des intervalles Δt est inférieur à T, c'est-à-dire tant que la phase d'usinage envisagée n'est pas terminée. A chaque incrément, on met en oeuvre un algorithme d'enlèvement de matière 16. L'objectif de cet algorithme d'enlèvement de matière est, à chaque incrément de temps, de simuler l'enlèvement de matière, c'est-à-dire d'actualiser le modèle Gp.

Lorsque la totalité de la phase d'usinage a été simulée en un temps (T), on compare l'état de Gp à une référence Gpr (test 17) pour pouvoir notamment être en mesure d'évaluer l'état de surface de la pièce à l'issue de la phase d'usinage, typiquement une passe de l'outil.

Si l'état de surface de Gp est satisfaisant, c'est-à-dire au moins égal à celui de Gpr, on retient les paramètres de la fonction de modulation (bloc 18) qui a permis d'atteindre ce résultat. On utilisera ultérieurement ces paramètres ΔΩ et ω pour faire varier la vitesse de rotation (de la broche dans le cas d'un tournage) selon cette fonction de modulation, pendant l'usinage réel de durée T.

Si l'état de surface n'est pas satisfaisant, on change les paramètres de la fonction de modulation (bloc 19) pour modifier les caractéristiques de l'avance outil/pièce et on reprend la simulation de la phase d'usinage et ceci autant de fois que nécessaire pour obtenir un modèle Gp actualisé présentant un état de surface satisfaisant.

Il est à noter que des algorithmes mettant en oeuvre des étapes comme décrit ci-dessus ont été publiés. Les références de ces publications sont les suivantes :

Thèses :

Kaled Dekelbab, 1995, "Modélisation et simulation du comportement dynamique de l'ensemble Pièce-Outil-Machiné en usinage par outil coupant", Ecole Nationale Supérieure d'Arts et Métiers - CER de Paris.

Erwan Beauchesne, 1999, "Modélisation et simulation dynamique de l'usinage : prise en compte d'une pièce déformable", Ecole Nationale Supérieure d'Arts et Métiers - CER de Paris.

Audrey Marty, 2003, "Simulation numérique de l'usinage par outil coupant à l'échelle macroscopique : contribution à la définition géométrique de la surface usinée", Ecole Nationale Supérieure d'Arts et Métiers - CER de Paris.

Stéphanie Cohen-Assouline, 2005, "Simulation numérique de l'usinage à l'échelle macroscopique : prise en compte d'une pièce déformable", Ecole Nationale Supérieure d'Arts et Métiers - CER de Paris.

Articles dans les revues :

S. Assouline, E. Beauchesne, G. Coffignal, P. Lorong et A. Marty, 2002, "Simulation numérique de l'usinage à l'échelle macroscopique : modèles dynamiques de la pièce", Mécanique et Industrie, Vol. 3, pp. 389-402.

P. Lorong, J. Yvonnet, G. Coffignal et S. Cohen, 2006, "Contribution of Computational Mechanics in Numerical Simulation of Machining and Blanking", Archives of Computational Method in Engineering, Vol. 13, pp. 45-90.

Un algorithme, actuellement préféré, est opérationnel au sein du logiciel de nom Nessy. Nessy a plus particulièrement été décrit dans les articles suivants :

P. Lorong, F. Ali et G. Coffignal, 2000, "Research oriented software development platform for structural mechanics : a solution for distributed computing", Second International Conference on Engineering Computational Technology, Developments in engineering computational technology, ed. B.H.V. Topping Louvain, Belgique, PP 93-100.

G. Coffignal et P. Lorong, **2003**, "Un Logiciel éléments finis pour développer et capitaliser des travaux de recherche", 6ème Colloque National en Calcul des Structures, Giens.

Le procédé objet de l'invention est plus particulièrement utile pour le tournage de pièces de grands diamètres comme des disques de rotor de turbine ou de compresseur pour turboréacteur. Ces pièces sont susceptibles d'entrer en vibration lors de l'usinage, sous l'effet de l'effort de coupe. La détermination préalable d'une fonction de modulation optimale de la vitesse de rotation pièce-outil, tout au long de l'usinage, permet de prévenir l'apparition de ces modes vibratoires et donc d'obtenir l'état de surface souhaité.

**Revendications**

1. Procédé de détermination des conditions d'une phase d'usinage d'une pièce avec modulation d'une vitesse de coupe entre ladite pièce et un outil, **caractérisé en ce que** l'on simule (10) ladite phase d'usinage en fixant provisoirement les paramètres d'une fonction de modulation de ladite vitesse, **en ce que** l'on déduit par calcul l'état de surface correspondant de la pièce, après achèvement de ladite phase d'usinage, **en ce que** l'on modifie (19) itérativement lesdits paramètres de la fonction de modulation en simulant à chaque fois ladite phase d'usinage pour en déduire l'état de surface correspondant jusqu'à ce que celui-ci atteigne une valeur admissible et **en ce que** l'on procède à ladite phase d'usinage en faisant varier la vitesse de coupe ($\Omega(t)$) selon la fonction de modulation correspondant à l'état de surface de valeur admissible.

2. Procédé selon la revendication 1, **caractérisé en ce que** la fonction de modulation est du type :

$$\Omega(t) = \Omega_N = \Delta\Omega.\, F\omega(t)$$

avec

$$-1 \leq F\,\omega\,(t) < 1$$

$F\omega(t)$ étant une fonction périodique de période $2\Pi/\omega$, $\Omega_N$ étant une vitesse nominale et $\Delta\Omega$ une amplitude de variation autour de ladite vitesse nominale.

3. Procédé selon la revendication 2, **caractérisé en**

**ce que** ladite fonction périodique est une sinusoïdale.

4. Procédé selon l'une des revendications précédentes, **caractérisé en ce que** l'usinage précité est une opération de tournage.

**Claims**

1. A method of determining conditions of a stage of machining a workpiece while modulating a cutting speed between the workpiece and a tool, the method being **characterized by** the following steps: simulating (10) said machining stage by provisionally setting the parameters of a function for modulating said speed; deducing therefrom by calculation the corresponding surface state of the workpiece after said machining stage has been completed; iteratively modifying (19) said parameters of the modulation function, each time simulating said machining stage so as to deduce therefrom the corresponding surface state until the surface state reaches an acceptable value; and performing said machining stage by causing the cutting speed ($\Omega(t)$) to vary in application of the modulation function corresponding to the surface state of acceptable value.

2. A method according to claim 1, **characterized in that** the modulus function is of the type:

$$\Omega(t) = \Omega_N + \Delta\Omega . F\omega(t)$$

with

$$-1 < F\omega(t) < 1$$

$F\omega(t)$ being a periodic function of period $2\Pi/\omega$, $\Omega_N$ being a nominal speed, and $\Delta\Omega$ being an amplitude of variation about said nominal speed.

3. A method according to claim 2, **characterized in that** said peripheral function is a sinewave.

4. A method according to any preceding claim, **characterized in that** the above-specified machining is a turning operation.

**Patentansprüche**

1. Verfahren zur Bestimmung der Zustände einer Phase der Maschinenbearbeitung eines Arbeitsstücks mit modulierter Schneidgeschwindigkeit zwischen dem Arbeitsstück und einem Werkzeug, **dadurch gekennzeichnet, daß** die Maschinenbearbeitungsphase durch vorläufiges Festlegen der Parameter einer Funktion zur Modulation der Geschwindigkeit simuliert (10) wird, dadurch, daß die entsprechende Oberflächenbeschaffenheit des Arbeitsstücks nach der Beendigung der Maschinenbearbeitungsphase durch Berechnung hergeleitet wird, dadurch, daß die Parameter der Modulationsfunktion iterativ geändert werden (19), indem jedes Mal die Maschinenbearbeitungsphase simuliert wird, um davon die entsprechende Oberflächenbeschaffenheit herzuleiten, bis diese einen zulässigen Wert erreicht, und dadurch, daß die Maschinenbearbeitungsphase vorgenommen wird, indem die Schneidgeschwindigkeit ($\Omega(t)$) gemäß der Modulationsfunktion variiert wird, die der Oberflächenbeschaffenheit mit dem zulässigen Wert entspricht.

2. Verfahren nach Anspruch 1, **dadurch gekennzeichnet, daß** die Modulationsfunktion vom folgenden Typ ist:

$$\Omega(t) = \Omega_N = \Delta\Omega \cdot F\omega(t)$$

mit

$$-1 \le F\omega(t) < 1$$

wobei Fw(t) eine periodische Funktion mit der Periode $2\pi/\omega$ ist, wobei $\Omega_N$ eine Nenngeschwindigkeit und $\Delta v$ ein Schwankungsbereich um die Nenngeschwindigkeit ist.

3. Verfahren nach Anspruch 2, **dadurch gekennzeichnet, daß** die periodische Funktion sinusförmig ist.

4. Verfahren nach einem der vorhergehenden Ansprüche, **dadurch gekennzeichnet, daß** die vorhergehend genannte Maschinenbearbeitung ein Dreharbeitsgang ist.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **KALED DEKELBAB.** *Modélisation et simulation du comportement dynamique de l'ensemble Pièce-Outil-Machiné en usinage par outil coupant,* 1995
- **ERWAN BEAUCHESNE.** *Modélisation et simulation dynamique de l'usinage : prise en compte d'une pièce déformable,* 1999
- **AUDREY MARTY.** *Simulation numérique de l'usinage par outil coupant à l'échelle macroscopique : contribution à la définition géométrique de la surface usinée,* 2003
- **STÉPHANIE COHEN-ASSOULINE.** *Simulation numérique de l'usinage à l'échelle macroscopique : prise en compte d'une pièce déformable,* 2005

- **S. ASSOULINE ; E. BEAUCHESNE ; G. COFFIGNAL ; P. LORONG ; A. MARTY.** Simulation numérique de l'usinage à l'échelle macroscopique : modèles dynamiques de la pièce. *Mécanique et Industrie,* 2002, vol. 3, 389-402
- **P. LORONG ; J. YVONNET ; G. COFFIGNAL ; S. COHEN.** Contribution of Computational Mechanics in Numerical Simulation of Machining and Blanking. *Archives of Computational Method in Engineering,* 2006, vol. 13, 45-90
- Research oriented software development platform for structural mechanics : a solution for distributed computing. **P. LORONG ; F. ALI ; G. COFFIGNAL.** Second International Conference on Engineering Computational Technology, Developments in engineering computational technology. 2000, 93-100